# EUROPEAN PATENT APPLICATION

(11) **EP 2 120 177 A1**
(43) Date of publication of application: **18.11.2009**
(21) Application number: 08710860.1
(22) Date of filing: 06.02.2008
(51) Int. Cl.: G06F 21/24, G06F 21/22

(54) **INFORMATION PROCESSOR FOR MANAGING ELECTRONIC INFORMATION HISTORY**

(30) Priority: 07.02.2007 JP 2007056316
(71) Applicant: Humming Heads Inc., Tokyo 104-0052 (JP)
(72) Inventor: OE, Naoyuki, Tokyo 104-0052 (JP); SHIMA, Takahiro, Tokyo 104-0052 (JP); SAITO, Hiroshi, Tokyo 104-0052 (JP); KURITA, Makoto, Tokyo 104-0052 (JP)
(74) Representative: Fuhlendorf, Jörn
(86) International application number: PCT/JP2008/051964
(87) International publication number: WO 2008/099738

(57) **Abstract**

An electronic information format includes a header module and a history module in addition to source electronic information. A control program is incorporated in the header module, and the control program is expanded on a reception side. An operation on the electronic information on the reception side is recorded by the control program, and is written in the history module when the electronic information is closed. On a providing side, there are provided a program for creating electronic information of the present format, and a program for reading the history data from the electronic information. By this system, when the electronic information is provided, an operation, which is executed on the electronic information on the reception side, is recorded, and the record can be confirmed on the providing side.

## Description

### Technical Field

The present invention relates to an information processing apparatus which manages and controls the history of electronic information in a case where information is created as electronic information and is added to a mail or the like and forwarded, or electronic information which is created by processing and editing source electronic information is used, stored or re-forwarded.

### Background Art

In recent years, personal computers (PCs), mobile phones, PDAs (personal digital assistants) and Internet networks have prevailed all over the society, and the use of information communication means has been expanding more and more. Under this social circumstance, the leak of personal information and confidential information of business corporations has emerged as a new social problem. In addition, there is no end to acts of disguising (spoofing) by processing and tampering information that is created by third parties.

The development of the digitized and highly-networked information society has brought great benefits to people, but there has been an increasing number of cases of unlawful use. The number of cases of unlawful acts due to malicious uses by guileful persons has been increasing more and more. At present, it is difficult to clamp down such crimes using computer information communications.

On the other hand, the ground digital Hi-Vision broadcast has started and the service called "One Seg" has begun. It has become possible for any one to start a broadcast station from the Internet network. People can enjoy TV broadcast by receiving One Seg radio waves from mobile phones. Viewing is possible by car navigation equipment, portable PCs, and DVD players. Ground broadcast digital Hi-Vision can be viewed, and news broadcast, weather forecast, baseball game broadcast, sport game broadcast such as soccer, pictures can be enjoyed.

However, in such public broadcast, there is also a danger of rampancy of crimes such as tampering of electronic information, and disguising. In the case of this example, if information is once leaked, the damage is immense. In the case of personal privacy and business corporation' information, serious damages will be caused.

Conventionally, the management of such electronic information data has been conducted by managing servers by employing managers in business corporations. For example, checking functions are provided in the OS (operating system) so as to prevent third parties from accessing company's information or personal information, or purpose-specific access management tools are added.

However, in the case where various data or information was forwarded by mails, it cannot be understood at all how the data or information was tampered and re-used on the receiving side, or whether source information was overwritten, whether a specific portion of the information or data was taken out, re-used or forwarded to third parties.

The management of information on the transmission side can be possible to some degree, but it is difficult to manage electronic information which has been taken out by mails or other means. According to techniques of protected electronic information, which are disclosed in the following listed patent documents, the operation on electronic information on the receiving side can be controlled by a condition which is set by the transmission side, but the transmission side is unable to recognize what operation has been performed or attempted on the receiving side.

Patent document 1: Jpn. Pat. Appln. KOKAI Publication No. 2002-288087, and

Patent document 2: Jpn. Pat. Appln. KOKAI Publication No. 2003-044297.

### Disclosure of Invention

One of problems to be solved is how to realize the management of source information even when transmission-source electronic information has been forwarded. This enables the transmission side to understand the history of, e.g. addition to a mail, printing, forwarding of a file, file copy, viewing, copy to a clipboard, copy to a floppy (trademark) disk (FD), saving with a different title, attachment to an object, capture of a screen, take-out of a specific portion of data or information, tampering, overwrite, and forward to a third person.

In the above-described prior art, however, if electronic information is once taken out by some means from the transmission side, the above-described acts cannot be managed or prevented. The reason is that the move and forward of files can be executed in various modes.

The object of the present invention is to provide a file structure which makes understandable the history of source electronic information even under the environment in which security is not ensured. If a forward destination of source information of a transmission side has executed viewing, copy, print, cut-out of a specific portion of information, or re-forward to a third person, the history of such an operation is recorded in electronic information. If this electronic information is returned to the transmission side, the transmission side can view the history. In addition, an operation on the forward destination side is recorded in a source information history memory, and is updated each time, and it is understood in what condition the source information is, and whether the source information has been processed or not.

In the intra-corporation environment, too, information, which indicates who has accessed and when the access has occurred, is directly combined with the substance of electronic information, and this information can be confirmed.

According to a first aspect of the present invention, there is provided an information processing apparatus comprising: memory means for storing electronic information and restriction information which indicates a restriction relating to a process of the electronic information; means for executing an application program in which the stored electronic information is used; means for capturing an application programming interface (API) of an operating system, which relates to the electronic information that meets the restriction indicated by the restriction information and has been accessed by the executed application program; and a history module which stores history data relating to the electronic information including the captured API, and is provided in connection with the electronic information.

According to a second aspect of the present invention, the apparatus of the first aspect further comprises means for transmitting the history data to an external other information processing apparatus which executes security management of the electronic information.

### Brief Description of Drawings

FIG. 1 shows a format of controllization electronic information;
FIG. 2 shows functions of a control program;
FIG. 3 shows an example of a control attribute;
FIG. 4 shows an example of a control condition;
FIG. 5 shows an example of history data;
FIG. 6A illustrates a procedure of file forward and history;
FIG. 6B shows history data which is stored in a database;
FIG. 7 illustrates a process of capturing an API by a control program or a controllization electronic file creating program;
FIG. 8 is a system configuration diagram showing a second embodiment;
FIG. 9 is a system configuration diagram showing a third embodiment;
FIG. 10 is a system configuration diagram showing a fourth embodiment;
FIG. 11 is a flow chart showing a fifth embodiment, and illustrates a process of adding a restrictive condition of a file;
FIG. 12 is a flow chart illustrating an example of a process of accessing and closing a file;
FIG. 13 is a flow chart illustrating an example of a history management process; and
FIG. 14 is a view showing a state transition.

### Best Mode for Carrying Out the Invention

### <Outline of Invention>

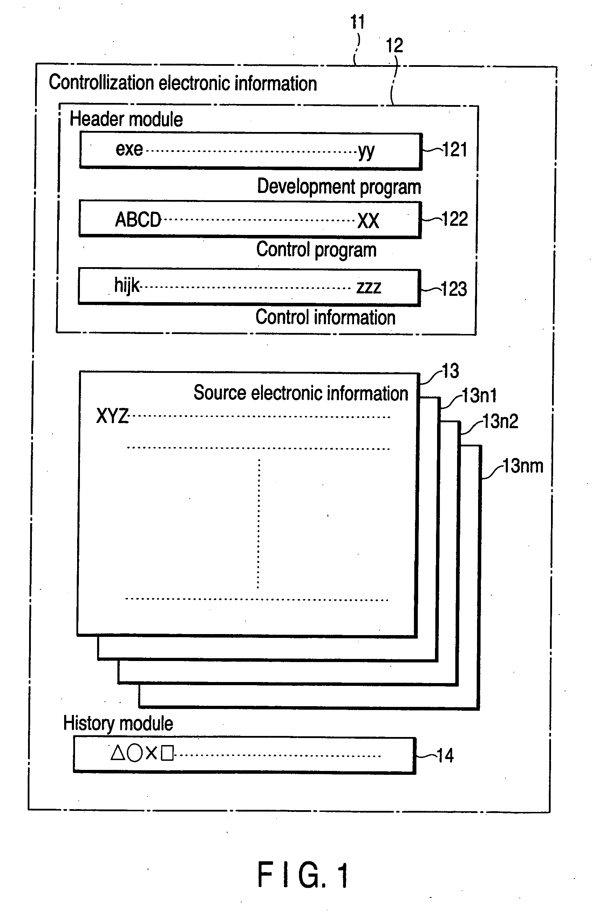

An information processing apparatus according to the present invention is characterized by the structure of electronic information on a transmission side. Source electronic information 13, such as data or a document, is provided with a header module 12. The header module 12 shown in FIG. 1 comprises at least three components: an expansion program (exec) 121, a control program (CP) 122 and restriction information 123. In addition, a history module (phm) 14 is provided.

Hereinafter, execution-format electronic information having this structure is referred to as "controllization electronic information 11". The security of the controllization electronic information 11 is enhanced by encrypting the source electronic information 13, restriction information 123 and history module 14.

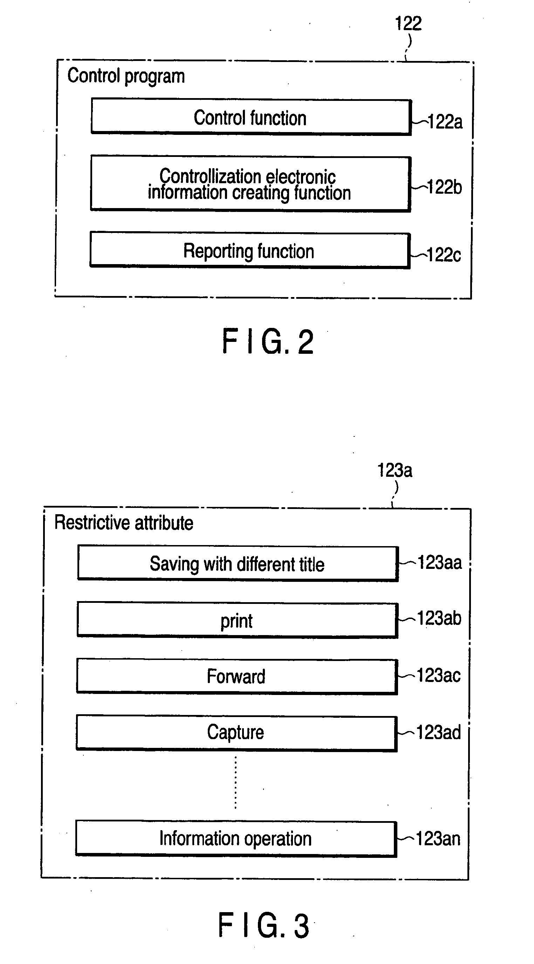

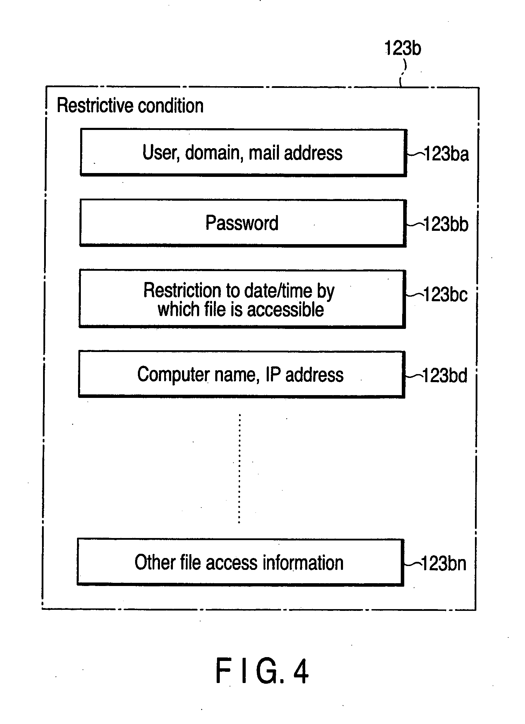

As shown in FIG. 2, the control program 122 includes a control function 122a which monitors an application program, records a history, and controls operations by a restrictive attribute 123a preferably shown in FIG. 3; a controllization electronic information creating function 122b which creates once again the controllization electronic information by storing source electronic information 13n1 to 13nm, which has been edited after the execution of the controllization electronic information 11, and history data recorded in the history module 14; and preferably a report function 122c which sends the history data to the transmission side. The restriction information 123 includes basic information relating to the source electronic information 13, such as source electronic information titles; application information which designates an application program 16 which opens the source electronic information 13; history information which is indicative of users who can access history data, a condition for access and a destination of a report of the history; a restrictive attribute 123a preferably shown in FIG. 3; and a restrictive condition 123b preferably shown in FIG. 4. In the case where the application program 16 is specified by, e.g. an extension of the source electronic information title, the application information may be omitted.

In the environment in which a program having the functions of the control program 122 is pre-installed in the computer, the controllization electronic information 11 does not need to include the expansion program 121 or the control program 122. In this case, the controllization electronic information 11 is not in an execution-format.

The transmission side of electronic information is provided with a program for creating the controllization electronic information 11. The controllization electronic information creating program (CFM) selects the source electronic information 13, such as data or a document, by a user operation, and adds thereto the header module 12 and history module, thereby creating the controllization electronic information 11. At this time, the restriction information 123, which is set by the user, may further be added. A second controllization electronic information creating program is provided in the transmission source of electronic information. When the source electronic information 13, such as data or a document, is created by the application program 16, the second controllization electronic information creating program captures an API (Application Programming Interface) which is issued by the application program 16 to the operating system in order to create the source electronic information 13, and adds the header module 12 and history module 14 to the created source electronic information 13, thereby forcibly creating the controllization electronic information 11, without the selection by the user. In the case where the restriction information 123 is added by the second controllization electronic information creating program, the restriction information 123 that is preset by a manager or the like is added, without the selection by the user.

In the environment in which a program having the functions of the control program 122 is pre-installed in the computer, there is no need to add the expansion program 121 and the control program 122 to the header module 12 in the process of creating the controllization electronic information 11.

The transmission source is further provided with a history data read program (LR) which reads history data from the controllization electronic information 11. The history data read program (LR) reads the history data which is recorded in the selected controllization electronic information 11, and displays the history data. In addition, by the user's designation, the history data which is recorded in the controllization electronic information 11 is read and written to other electronic information, or is reported as communication data to the manager or the like. In the history data read process, the history data read program accesses the history module 14 and, in the case where the history data is encrypted, decrypts the history data and reads out the history data.

As a history data display method, a method is thinkable, for example, wherein one choice is selected from a displayed menu by clicking the controllization electronic information 11 with a mouse, for the purpose of simplicity, and thereby a history data read program is started to display history data. Preferably, the history data in the controllization electronic information 11 is cleared by the user's selection or condition. In addition, the read-out of the history data can be executed only in the case where the condition relating to the user or some other condition agrees with a condition which is described in the control information in the controllization electronic information 11, or with a condition which is designated outside the controllization electronic information 11.

Aside from the transmission source, if the execution-format controllization electronic information 11 is executed by the reception destination, the following process is executed by the expansion program 121 in the header module 12. If the controllization electronic information 11 is executed, in the case of agreement with the restrictive attribute 123a shown in FIG. 3, the control program 122 is loaded in a RAM in the computer and is started. In the case of non-agreement with the restrictive attribute 123a, the execution process of the controllization electronic information 11 is finished. The application program 16, which is designated by the application information of the control information 123, is activated. If the activation of the application program 16 or control program 122 has failed, the execution process of the controllization electronic information 11 is finished. The source electronic information portion is extracted, and in the case where the source electronic information portion is encrypted, it is decrypted and delivered to the application program 16.

The operation on the source electronic information 13 by the application program 16 is realized by the issuance of the API to the operating system by the application program 16. The control program 122 captures the API and records the corresponding operation history in a memory medium such as a memory or a disk. Examples of information included in the history data include an operation name, date/time, computer name, user name and folder name. In the case where the control attribute 123a is designated, the control program 122 restricts the operation by returning an error to the API that is issued from the application program 16 and is captured, or returning dummy data.

When the application program 16 is finished and the source electronic information 13 is closed, the control program 122 captures an API for closing the source electronic information 13, which is issued to the operating system from the application program 16, and executes the controllization electronic information creating process. In the controllization electronic information creating process, the header module 12 of the original controllization electronic information 11 is added to the source electronic information 13, and further the history data that is recorded in the memory medium is stored in the history module (phm) 14. The source electronic information 13 may be only the source electronic information 13 in the new state at the time of the end of the application program 16, or new source electronic information 13 may be added to the previous source electronic information 13, and the source electronic information 13 of different generations may be stored together. Preferably, the control program 122 reports the history data to the transmission source via the communication network at the time of recording the history data or at the time of the controllization electronic information creating process. In the execution of the automatic report of the history data, it is desirable, from the standpoint of social moral, that the transmission source inform, in advance, the reception destination that the history data is to be automatically reported.

Next, a description is given of the case of opening the controllization electronic information 11 which does not include the expansion program 121 or control program 122, in the environment in which the program having the functions of the control program 122 is pre-installed in the computer. In this environment, if the application program 16 opens the controllization electronic information 11, the program having the functions of the control program 122 extracts the source electronic information 13 from the controllization electronic information 11. If the source electronic information 13 is encrypted, the program decrypts the source electronic information 13 and delivers it to the application program 16. The schemes of recording the operation history and restricting the operation are the same as those described above. The controllization electronic information creating process at the time of finishing the application program 16 and closing the source electronic information 13 is the same as described above, except that the expansion program 121 and control program 122 are not included in the header module 12.

The reception side includes a PC for accessing electronic information, a server, a memory medium such as a hard disk (HDD), an FD or a memory, a display, a printer, a facsimile (FAX) and a digital copy machine (MPF: multi-function peripheral) for making use of received electronic information and files, and input/output devices such as a keyboard and a mouse.

An information communication network is provided as means for forwarding and moving electronic information and data from the transmission source to the reception side. Alternatively, a private LAN (local area network) is provided. The information communication network includes the Internet and a mobile wireless network. Further, the communication network is connected by an international information communication network, a satellite communication network and a GPS (global positioning system).

By the above-described information apparatus and system, the transmission source of electronic information can recognize an operation which has been performed at the reception destination.

In the present invention, the header module 12, which includes the control program 122 and restriction information 123, and the history module 14 are added to the source electronic information 13. Thereby, the operation on the electronic information is restricted, and information about the method, by which the reception side has used the electronic information, is recorded in the history module 14. Therefore, if the history module 14 is managed by the transmission source, the security of the electronic information and data can be ensured.

Moreover, when the controllization electronic information 11, which is executable, is opened on the reception side and the electronic information is closed after an act, such as processing, is conducted on the source electronic information 13, the header module 12 and history module 14 are re-set (re-creation of controllization electronic information 11). Thus, each time the source electronic information 13 is processed, the header module 12 and history module 14 are re-set. The act of processing of the electronic information on the reception side, in this context, includes viewing, saving, print, copy, move to other media, forward and a clipboard operation.

In the history management database of the transmission source, history management of transmitted electronic information and files can be performed. The state of electronic information and data, the degree of processing and the date/time can be understood. If the number of days is determined and a specified month/day has passed since the transmission of electronic information or a file, automatic erasure is executed.

The sender can set the restriction information 123 on the electronic information that is created at the transmission source, and the restriction information 123 is maintained on the reception side at the time of re-creation of the controllization electronic information 11. Thus, even in the case where the electronic information is transferred from the reception side to a third party, the security of the electronic information is maintained.

Thus, if the restriction information 123 and history module 14 are managed, an unlawful operation on the reception side can be prohibited or such an operation can be confirmed at the transmission source, and therefore there is the feature that the leak of secrets can be prevented and the infringement of copyrights can be prevented.

In addition, within the organization of the transmission source, too, the history data that is stored in the electronic information can be utilized as an access record. In the environment in which the program having the functions of the control program 122 is pre-installed in the computer, use can be made of the controllization electronic information 11 in such a format that the expansion program 121 and control program 122 are not included.

### <Embodiments of the Present Invention>

Embodiments of the present invention will now be described with reference to FIG. 1 to FIG. 14.

### <First Embodiment>

A concrete embodiment of the present invention is described with reference to FIG. 1 to FIG. 7. FIG. 1 shows the format of controllization electronic information 11. Numeral 12 denotes a header module. The header module 12 comprises an expansion program 121, a control program (CP) 122 and restriction information 123. In the environment in which a program having the functions of the control program 122 is pre-installed in a computer, the controllization electronic information 11 may be formed in such a format that the expansion program 121 and control program 122 are not included.

In FIG. 1, numeral 13 denotes source electronic information or data. In FIG. 1, the source electronic information 13 is depicted as being a plurality of information items (13, 13n1, 13nm). Numeral 14 denotes a history module (hereinafter "phm").

The header module 12 is described. The header module 12, as described above, comprises the expansion program 121, control program 122 and restriction information 123. If the controllization electronic information 11 is executed, the expansion program 121 is first executed. The expansion program 121 cooperates with a restrictive condition 123b in the restriction information 123, and refers to the restrictive condition 123b.

The restrictive condition 123b specifies the user and environment, which are permitted to access the source electronic information 13. Only when this condition is met, the source electronic information 13 can be opened. Depending on the content of the source electronic information 13, there is a case in which a person is not identified. For example, anyone, who has received advertisement, guidance or general information, can open this information.

In the restrictive condition 123b, the effective period of a password and electronic information is stipulated, that is, the period of the year, month, day and time, by which the information can be opened, is stipulated. If this period has expired, the associated electronic information cannot be opened. In the restriction information 123, the basic information, such as the title of the source electronic information 13 and the creator thereof, is described.

As shown in FIG. 2, the control program 122 includes a control function 122a which monitors an application program 16, records a history, and controls operations by the restrictive attribute 123a preferably shown in FIG. 3; a controllization electronic information creating function 122b which creates once again the controllization electronic information 11 by storing source electronic information, which has been edited after the execution of the controllization electronic information 11, and history data that is recorded; and preferably a report function 122c which sends the history data to the transmission source. Numeral 123 denotes restriction information. Numeral 13 denotes source electronic information.

History data is stored in the history module (phm) 14. In the history data, data as to who has accessed and processed the source electronic information 13 is encrypted and described. The decryption (decode) of the encrypted data is executed by a server at the transmission source or by a history data read program. Thus, the reception side cannot read the data.

The restriction information 123 includes basic information relating to the source electronic information, such as source electronic information titles; application information which designates the application program 16 which opens the source electronic information; history information which is indicative of users who can access history data, a condition for access and a destination of a report of the history; preferably, a restrictive attribute 123a for restricting operations on the electronic information on the reception side; and preferably a restrictive condition 123b which stipulate the condition for opening the electronic information. In the case where the application program 16 is specified by, e.g. an extension of the source electronic information title, the application information may be omitted.

The restriction information 123 includes, preferably, information relating to an information source. A person who has accessed the source electronic information 13 is enabled to understand from where the source electronic information 13 originates, whether the source electronic information 13 is the original or not, and whether source electronic information 13 has been overwritten or adapted. Although the detailed origin is clarified in the history module 14, the history module 14 is encrypted and thus the history module 14 can be decrypted by only the manager at the transmission source.

FIG. 3 shows an example of the restrictive attribute 123a. The restrictive attribute 123a is attribute information that designates an access right to electronic information, which is provided by the operating system as a standard, and that designates whether information operations, such as saving with a different title, print, forward, capture and clipboard operation, can be executed on electronic information.

Numeral 123aa denotes an attribute which indicates whether or not to permit an accessing person to save the source electronic information 13 with a different title. For example, if flag "1" is set, saving with a different title is permitted. If flag "0" is set, access is prohibited.

Numeral 123ab denotes a print permission/prohibition attribute. In this attribute, too, an accessing person is discriminated and chosen by flags "1" and "0", and a permission is issued. Numeral 123ac denotes an attribute of permission/prohibition of forward of electronic information to others. Numeral 123ad denotes an attribute indicative of permission/prohibition relating to capturing.

Numeral 123an indicates other attributes. For example, it is possible to stipulate attributes of details such as permission of paste, and permission/prohibition of access, forward and move of a specific portion of a file. Depending on the content of the source electronic information 13, selection may be made to define attributes here.

FIG. 4 shows an example of the restrictive condition 123b. The restrictive condition 123b is a condition for stipulating whether the controllization electronic information 11 can be executed to access the source electronic information 13. Examples of the item that becomes the condition may include a user, a domain, a mail address, a password, a date/time, a period and a computer name. Numeral 123ba denotes a user, a domain and a mail address, which are permitted to access the source electronic information. If this designation condition is not met, access is rejected. However, there are many kinds of source electronic information 13, and, as described above, electronic information, such as advertisements and notices for circulation, can be accessed without conditions.

Numeral 123bb denotes a password. This is a password that is set by the transmission source. Depending on the source electronic information 13, there is a case in which no password is set. Needless to say, no password is needed for electronic information, such as advertisements and notices for circulation. Numeral 123bc denotes an effective period of file access. In other words, this period is a use-by date. It is indicated that electronic information, for which the effective period has expired, is useless.

Numeral 123bd denotes an computer name and an IP address. This indicates that the electronic information can be opened only on a designated computer.

Numeral 123bn denotes other necessary conditions for access to a file. Depending on the content of files, there is a file that is to be strictly managed, and a file such as an advertisement, as described above, which is to be viewed by anybody. Conversely, there is a case in which unwanted mails and files are not to be received. The condition for refusing reception can be set in 123bn.

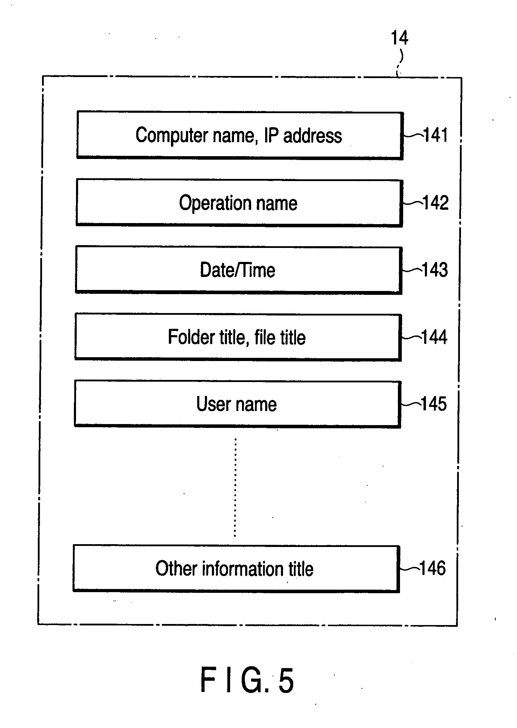

FIG. 5 shows an example of the history data that is stored in the history module 14. Examples of the item of the history data may include a computer name, an IP address, an operator name, an operation date/time, a folder name, a file name and a user name.

In a case where a copy of the original controllization electronic information 11 has been created by, e.g. a file copy operation, generation information, for instance, is included in the history data.

In the Figure, numeral 141 denotes a computer name and an IP address. The computer name and IP address, which are information for identifying the computer that has been operated, are recorded. The computer name, in this context, is the name of computer terminal equipment which is used by an accessing person and a user, and the computer terminal equipment includes a PC, a PDA and a mobile phone. Numeral 142 denotes an operator name which is judged from the API that is issued by the application program 16 and is captured by the control program 122. Numeral 143 denotes a date/time, and the date/time when an operation is performed is recorded. Numeral 144 denotes a folder name and a file name, and the name of a folder which has been operated, and the names of files at an operation source and an operation destination are recorded. Numeral 145 denotes a user name, and the name of the user who has executed an operation is recorded.

Numeral 146 denotes other information, such as an operation time and a forward destination, which is described. For example, a machine name and a MAC (media access control) address at an access and forward destination are described.

The history module 14, in which these information items are stored, is encrypted so that the reception-side user or forwarding person cannot view them. By reporting the history data to the manager at the transmission source, the manager can trace the whereabouts of the electronic information. Electronic information, which is at a time point after the passage of a predetermined period from the transmission of the original electronic information, may entirely be deleted as being past the so-called use-by date.

To trace and manage the electronic information by the transmission source is an important measure from the standpoint of security, too. This is useful for secret leak management. Electronic information runs all over the world through networks. Since the electronic information circulates through many people, there are cases in which the electronic information varies from the original form.

If electronic information, such as a file or a document, is traced for security management and a predetermined time has passed since the tracing of the electronic information, it is safer to delete the electronic information. There is no end to electronic crimes, such as tapping of electronic information by unlawful access by a hacker, tampering, or disguising. From the standpoint of countermeasures to these crimes, the strict history management of electronic information at the transmission source is a necessary act.

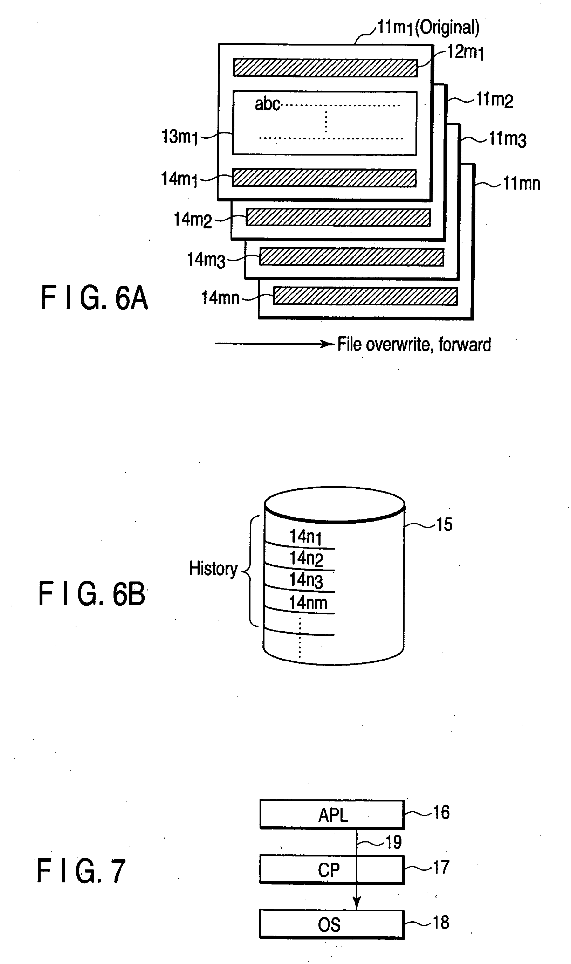

FIG. 6A and FIG. 6B are views illustrating the history management of the forward of a file. FIG. 6A is a schematic diagram showing the state in which forward of files has progressed from the original file 11m1 to a file 11mn. FIG. 6A illustrates an outward path of the forwarding of the source electronic information 13. In FIG. 6A, numeral 12 denotes the above-described header module.

Numeral 13 denotes the content of the source electronic information, and 14 denotes the history data module. History data is stored in the history data module 14. In FIG. 6A, the history data module 14 shows that file forward has been executed from 14m1 until 14mn. Overwrite, delete, additional write and forward destination of the electronic information during this period are all described. By referring to the history data of the history data module 14, differences from the original can be understood.

FIG. 6B shows a database which is connected to an electronic information history server at the transmission source. The database 15 stores the history modules 14, and the history modules 14 are stored in a time sequential manner from 14n1 to 14nm, as shown in the Figure. Comparison with the original, which is not shown, can also be executed. If the degree of tampering is great in comparison with the original of the electronic information, the manager at the transmission source may issue an alarm or delete the information.

Depending on electronic information, if the original electronic information is used, adapted or tampered, there is a case in which the use thereof is permitted with charging. This is also applicable to the case of producing a picture by using data of, e.g. an archive, or to the case of performing broadcast from an Internet broadcast Web. There is convenience for users. This is useful for the production of commercial broadcast.

FIG. 7 shows the scheme in which the control program 122 records a history. In FIG. 7, numeral 16 denotes the application program 16. Numeral 17 denotes the control program 122, or the controllization electronic information creating program (CFM) at a time of creating controllization electronic information at the transmission source. In the environment in which a program having the functions of the control program 122 is pre-installed in the computer, the program 17 may be thought to be the program having the functions of the control program 122. Numeral 18 is the operating system that is the basic software.

The operation on the source electronic information 13 by the application program 16 is realized by the issuance of the API to the operating system 18 by the application program 16. The control program 122 captures the API and records the corresponding operation history in the memory medium such as a memory or a disk. In the case where the control attribute is designated, the control program 122 restricts the operation by returning an error to the API that is issued from the application program 16 and is captured, or returning dummy data.

When the application program 16 is finished and the source electronic information 13 is closed, the control program 122 captures an API for closing the source electronic information 13, which is issued to the operating system 18 from the application program 16, and executes the controllization electronic information creating process. In the controllization electronic information creating process, the header module 12 of the original controllization electronic information 11 is added to the source electronic information 13, and further the history data that is recorded in the memory medium is stored in the history module (phm) 14.

The source electronic information 13 may be only the source electronic information 13 in the new state at the time of the end of the application program 16, or new source electronic information 13 may be added to the previous source electronic information, and the source electronic information 13 of different generations may be stored together. Preferably, the control program 122 reports the history data to the transmission source via the communication network at the time of recording the history data or at the time of the controllization electronic information creating process.

In the environment in which the program having the functions of the control program 122 is pre-installed in the computer, the program having the functions of the control program 122 executes the process in the same manner.

At the transmission source, when the source electronic information, such as data or a document, is created by the application program 16, the second controllization electronic information creating program captures the API which is issued by the application program 16 to the operating system 18 in order to create the source electronic information 13, and adds the header module 12 and history module 14 to the created source electronic information, thereby forcibly creating the controllization electronic information 11, without the selection by the user. In the case where the restriction information 123 is added by the second controllization electronic information creating program, the restriction information 123 that is preset by the manager or the like is added, without the selection by the user.

### <Second Embodiment>

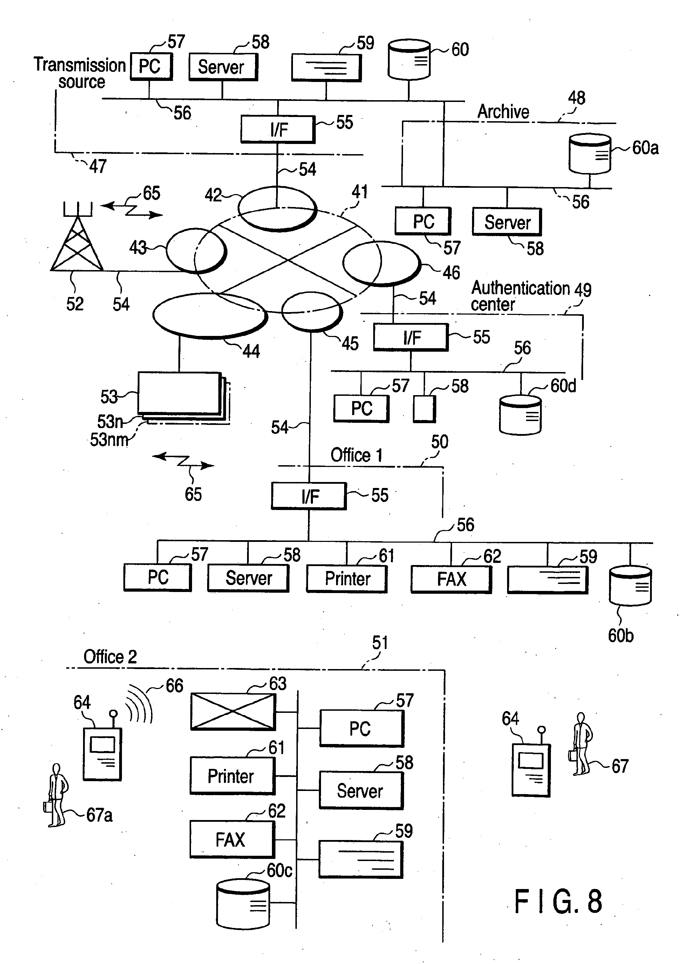

FIG. 8 shows a system configuration to which the information processing apparatus according to the embodiment of the invention is applied. The example of the configuration shown in FIG. 8 illustrates an application of the present invention to a social system. In FIG. 8, numeral 41 denotes an information communication network such as the Internet. Numerals 42, 43, 44, 45 and 46 denote Web sites.

Numeral 47 denotes a transmission source of information. This may be assumed to be an office of a company, a base which provides information, or an information providing center. A transmission source site of 42 is connected to a private LAN 56 of 47 via a communication line 54 and a line interface 55.

A PC 57 and a server 58 are connected to the LAN 56. The server 58 executes information transmission management according to the embodiment of the present invention. Numeral 59 denotes a display which enables viewing of the history of information transmission and electronic information files. Numeral 60 denotes a database, which executes management of electronic information and a transmission history thereof.

Numeral 48 denotes an archive, which stores various information. This is a library of writing, articles, painting, photos and movies. The transmission source 47 is connected to the archive 48 via the LAN 56. In the present embodiment, the archive 48 is directly connected to the information transmission source 47 via the LAN, but it may be connected via a general public network.

In the archive library 48, the PC 57 and server 58 manage an archive database 60a. The database 60a stores information and data of art works such as documents, documentary films and movies, which are available by corporation or individuals, with charge or for free. The data can be used for the production of movies or for advertisements. Since an intellectual property right, a copyright, etc. occur, when the library is used, a charge for the use is generally made.

Numeral 43 denotes a Web site of a mobile wireless communication company, which is connected to a radio base station 52 via a dedicated line 54. Numeral 65 denotes mobile radio waves. The mobile radio waves 65 and a mobile phone 64 can constitute a mobile office. Content 53 of the mobile office 51, Web cast 44 and Internet broadcast station 53 can be transmitted by the radio waves 65.

Numeral 44 denotes an Internet broadcast station, a Web broadcast station or a Web cast, and numeral 53 denotes broadcast content. In recent years, broadcast equipment with high-level functions and low cost have come in for consumer uses. In particular, as Camcorders for Hi-Vision, household video cameras with sufficiently high quality have been marketed.

With these household equipment, movies and broadcast programs can be produced. With use of the archive library 48, even individuals produce high-quality works. Numeral 53 shows the state in which such a work is being broadcast. This may also be commercial broadcast with a sponsor.

Numeral 45 denotes a company site, which is connected to an office 1 of 50 via the communication line 54. The site 45 is connected to the private LAN 56 of the office 1 via the line interface 55. In the Figure, 50 is a reception destination, as viewed from the information transmission source 47. The PC 57, server 58, printer 61, FAX 62 and display 59 are connected to the LAN 56, whereby office works are conducted.

Numeral 60b denotes a database of the office 1, which stores electronic information which is forwarded from the transmission source 47. In the office 1, the PC 57 is used to view the electronic information or file, which is forwarded from the transmission source 47, on the display 59, or forwards the electronic information or file to other companies or offices from the PC or FAX. Besides, print may be executed by the printer 61.

The electronic information or file, which has been transmitted from the transmission source 47, is stored along with the original in the database 60b of the office 1 of 50, and the source data is processed, and the history of forward to others is recorded in the database 60 of the information transmission source 47. Needless to say, the history of the office 1 is also recorded in the database 60b. Numeral 64 denotes a mobile phone or a PDA, and numeral 67 denotes an office worker who operates. The electronic information, which has been received by the mobile phone 64, is also recorded in the database 60 of the transmission source 47, and is recorded in the database 60b of the office 50 that is the receiving side.

Accordingly, the history of the electronic information and file is managed both on the transmission side and reception side. The information can be output from the mobile terminal 64 to the printer 61, and the content can be displayed on the display 59 and viewed. The information can be sent from the FAX 62 via the line. The history relating to these matters is recorded in the database 60 of the transmission source 47 and the database 60b of the office 1 and is managed.

Numeral 51 denotes an office 2 which is a mobile office. A worker or person 67a can execute an operation from a mobile terminal 64a. Electronic information can be received/transmitted. The electronic information or file, which has been received from the transmission source 47, is sent to a gateway 63 and a wireless reception adapter from the mobile phone 64a. Numeral 66 denotes weak radio waves which are transmitted from the mobile terminal 64a, or IrDA (far-infrared optical communication). The premise is a hot-spot area which makes use of weak radio waves or IrDa communication.

The gateway 63 connects various OA apparatuses by the LAN 56. These are the printer 61, FAX 62, PC 57, server 58, display 59 and database 60c. The functions of these OA apparatuses may be integrated in a portable MFP (multi-function peripheral), and if the MFP is a mobile one, it can be carried anywhere with higher convenience.

The mobile office 51 with this structure is called a ubiquitous office. Thus, office works can be done anytime, anywhere. Offices can be created on the street, in parks, or in moving bodies such as a train. The history of reception/transmission of the electronic information or file is recorded in the database 60c.

The Web site 46 is a site of an authentication center 49, which is connected to the LAN 56 via the communication line 54 and line interface 55. The authentication center manages an electronic request for managerial decision, a contract and electronic signature. The history management method of electronic information by the present invention can bring about the same advantageous effect as with conventional requests for managerial decision.

The request for managerial decision is endorsed by seals of plural persons after a consultation by the plural persons. If the history is managed by the present invention, the electronic seals or electronic signatures are managed in the authentication center 54. The history of contracts and endorsements of companies and corporations can be managed.

The authentication center 49 includes a PC 57, a management server 58, other necessary OA apparatuses (not shown) and a display. Numeral 60d denotes a database of the authentication center, which manages the history of various electronic seals, signatures and contracts.

The database 60d executes recording with use of encryption, in order to prevent tampering, overwrite, tapping or disguising. Companies, corporations and individuals, which conclude contracts with the authentication center, can access the documents, electronic seals and signatures, which are stored in the database 60d, by using decryption keys (not shown).

The electronic seals and electronic signatures of both corporations and individuals are pre-registered in the authentication center 49. When the request for managerial decision and seals are necessary, they are taken out from the database 60d by encryption keys (not shown), and electronic documents are signed. The electronic documents are forwarded to persons, corporations and companies, which are concerned with the request for managerial decision, and are endorsed. The requests for managerial decision and documents are stored in the database 60d and are managed.

Therefore, if the history management method according to the present invention is used, electronic seals and electronic signatures can be put on the electronic documents of the transmission source 47, and the requests for managerial decision can be endorsed. The history of electronic documents is managed by the database 60 at the transmission source 47, and the electronic seals and electronic signatures are stored in the database 60d of the authentication center 49.

If the social structure shown in FIG. 8 is realized, paperless office works can be done, and office works with high efficiency can be achieved. The productivity of white-collar workers can be improved and the paper-related pollution, which is detrimental to the environment, can be eliminated, and, in a word, two birds are killed with one stone.

### <Third Embodiment>

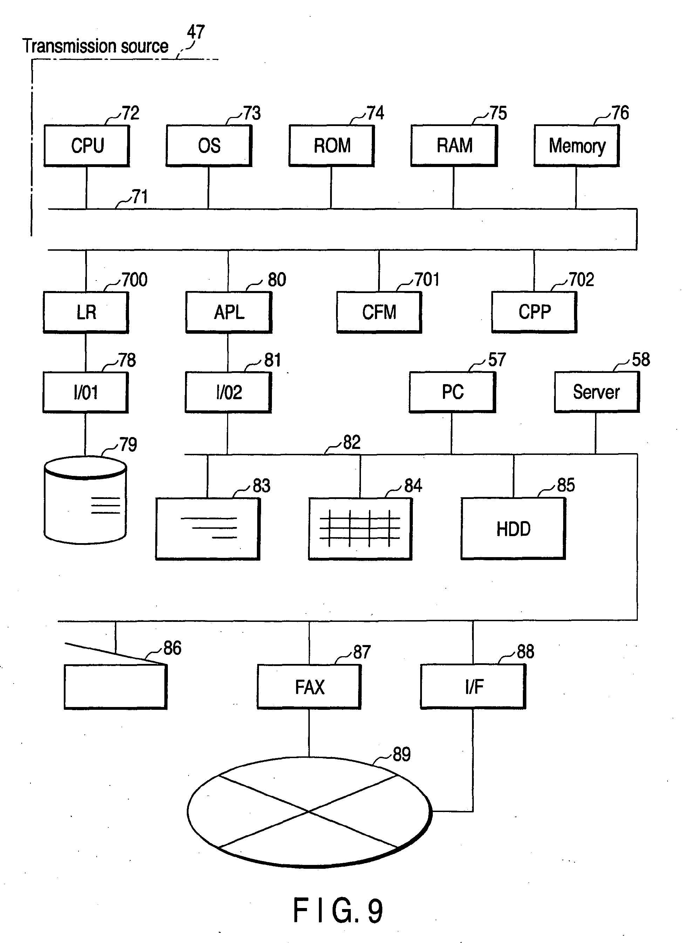

FIG. 9 is a system configuration diagram showing a third embodiment. The system configuration of the transmission source is shown. FIG. 9 is a view for describing the details of the transmission source 47 in FIG. 8 according to the second embodiment. In FIG. 9, 71 is a system bus, and 72 is an arithmetic control processor. Numeral 73 denotes an OS (operating system), or basic software, which controls the entire system.

Numeral 74 denotes a ROM that is a program memory, and 75 is a RAM. Numeral 76 denotes a rewritable memory which temporarily stores arithmetic data of the CPU 72, and is used where necessary. Numeral 700 denotes an information processing module which is connected to the system bus 71 and is called a history data read program (Log Reader), which reads out history data from the controllization electronic information 11.

The history data read program 700 reads and displays the history data that is recorded in the selected controllization electronic information 11. By the user's designation, the history data which is recorded in the controllization electronic information 11 is read and written to other electronic information, or is reported as communication data to the manager or the like. The electronic information is stored in a database 79 via an I/O1 78. The database 79 is the same as the database 60 in FIG. 9. As a history data display method, a method is thinkable, for example, wherein one choice is selected from a displayed menu by clicking the controllization electronic information 11 with a mouse, for the purpose of simplicity, and thereby the history data read program 700 is started to display history data. Preferably, the history data in the controllization electronic information 11 is cleared by the user's selection or condition.

Numeral 701 denotes a controllization electronic information creating program CFM (Control File Maker). The CFM selects the source electronic information, such as data or a document, by a user operation, and adds thereto the header module and history module 14, thereby creating the controllization electronic information 11. At this time, the restriction information 123, which is set by the user, may further be added. When the source electronic information, such as data or a document, is created by the application program 16, the second controllization electronic information creating program captures the API which is issued by the application program 16 to the operating system in order to create the source electronic information, and adds the header module and history module 14 to the created source electronic information, thereby forcibly creating the controllization electronic information 11, without the selection by the user. In the case where the restriction information 123 is added by the second controllization electronic information creating program, the restriction information 123 that is preset by the manager or the like is added, without the selection by the user.

Numeral 702 denotes a program (CPP) having the functions of the control program 122. In the environment in which the program 702 is installed, controllization electronic information 11, which has such a format that the expansion program 121 and control program 122 are not included in the header module, may be created by the CFM 701. The CFM 701 may be used so as to create the controllization electronic information 11, which has such a format that the expansion program 121 and control program 122 are not included in the header module, for the environment in which the program having the functions of the control program 122 is pre-installed, and so as to create the controllization electronic information 11, which has such a format that the expansion program 121 and control program 122 are included in the header module, for the environment in which the program having the functions of the control program 122 is not pre-installed.

The fact that the header and history are added to the electronic information is also advantageous in searching enormous information. If a searcher obtains permission from the transmission source 47 or authentication center 49 in FIG. 8 and refers to a number or a keyword in the header, the searcher can conveniently search for target information or data.

In FIG. 9, an application program (APL) 80 is created by the user, or created by processing or editing a program that is obtained from others, so that the application program 80 may have high usability for the user or may fit to the own company's products.

Numeral 81 denotes an I/O2 which is an interface of devices that are connected to a LAN 82. Numeral 57 denotes a PC, and 58 is a server. Numeral 83 denotes a display, and 84 is a data input device such as a keyboard or a mouse.

Numeral 85 denotes a hard disk, which stores data that is used here, information that is created by the user, and programs. Numeral 86 denotes a printer or a copying machine, and 87 is a facsimile. The type of the FAX 87 is G3, IPFAX or G4FAX, which is used according to purposes.

The facsimile 87 includes an internal line interface unit, from which access is made to the Internet 89 and information communication networks. Numeral 88 denotes a line interface with external information communication networks.

With the above-described management, the history management data relating to not only the electronic information but also ordinary documents and hand-written information can additionally be stored in the database with no problem by the method of the present invention. Therefore, great advantageous effects can be obtained in the secret leak and security management of information.

### <Fourth Embodiment>

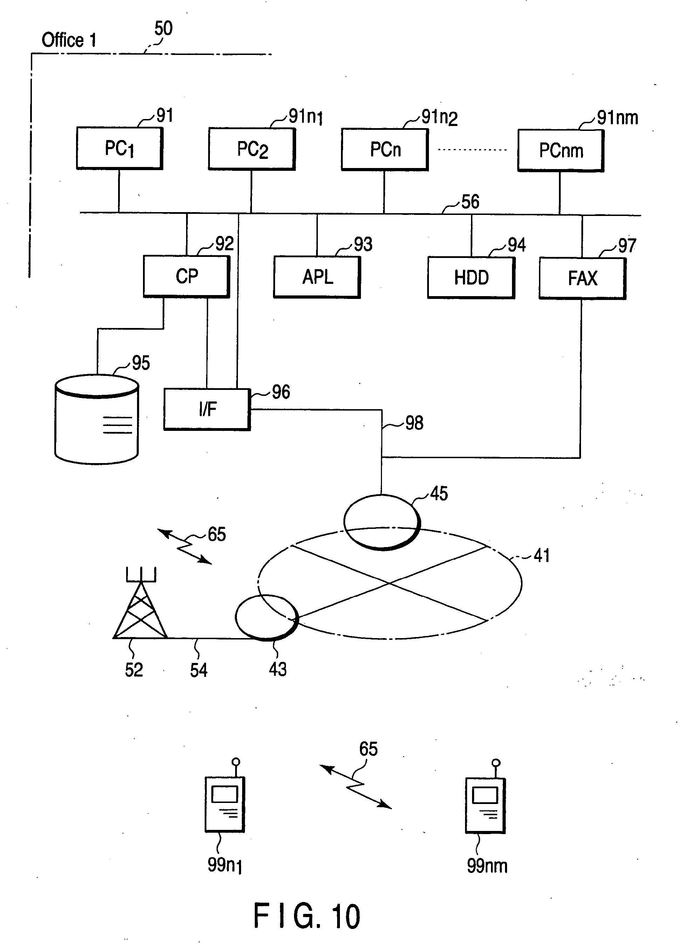

The present embodiment is the details of the office 1 of the information reception side 50 shown in FIG. 8, which has been described in the third embodiment. In FIG. 10, an ordinary company office is assumed on the reception side 50. The office is connected to various OA apparatuses by the private LAN 56.

Usually, office works are done by using personals computers, or PCs. Accordingly, there are many PCs. In the Figure, 91 to 91nm are PCs. Numeral 92 denotes a control program (CP). As described above, the control program 92 is expanded and activated when the controllization electronic information 11 is executed. The control program 92 captures the API, which is issued when the operation on the source electronic information is executed by an application program 93, and records the corresponding operation history in the memory medium such as a memory or a disk. In the case where the control attribute is designated, the control program 92 restricts the operation by returning an error to the API that is issued from the application program 93 and is captured, or returning dummy data.

When the application program 93 is finished and the source electronic information is closed, the control program 92 captures an API for closing the source electronic information, which is issued to the operating system from the application program 93, and executes the controllization electronic information creating process. In the controllization electronic information creating process, the header module of the original controllization electronic information 11 is added to the source electronic information, and further the history data that is recorded in the memory medium is stored in the history module (phm) 14. Preferably, the control program 92 reports the history data to the transmission source via the communication network at the time of recording the history data or at the time of the controllization electronic information creating process.

Numeral 95 denotes history data which is recorded by the control program 92. Numeral 93 denotes the application program that is used in this office. Numeral 94 denotes a hard disk which is a memory medium.

Numeral 97 denotes a FAX, and, as described above, the FAX itself has an interface function with the communication line. Accordingly, various information can be input/output via this FAX.

Numeral 96 denotes an interface unit. The input/output of information to/from the office 50 is all executed via this interface, except for the information via the FAX 97. In the case where the history information is reported from the control program 92 to the transmission source of the electronic information, the report is executed via the interface 96. Numeral 45 denotes the site of this office, and 41 denotes a public information communication network.

Numeral 99 denotes a mobile terminal device such as a mobile phone, a mobile information device or a PDA. The mobile terminal device 99 is an effective mobile device when an office worker of 50 is in business outside the company. The radio waves of the mobile wireless communication company are used when the mobile terminal device 99 is used outside the company, on the street, or in other companies or corporations. In this case, the radio waves 65 are transmitted from the base station 52 of the mobile wireless communication company to the company office 50 via the information communication network 41.

The mobile terminal device 99 enables the use of the apparatuses in the office 50 as if they are at hand. The electronic information or file, which has been received or transmitted by the mobile terminal device 99, can be displayed, printed or stored in the memory medium. Besides, the information can be taken out from the office 50. At such a time, the history is managed through the control program 92. The management means that the history as to how the file or information has been used is updated and additionally written.

The description has been given of the office that is the information reception side. On the information transmission side, the history management is entirely executed by the history data read program 700, I/O 78 and database 79 of the transmission source, which are shown in FIG. 9. On the reception side, too, the history is managed by the control program 92 and history data 95. Thus, there is the feature that similar management can be executed indoors and outdoors.

### <Fifth Embodiment>

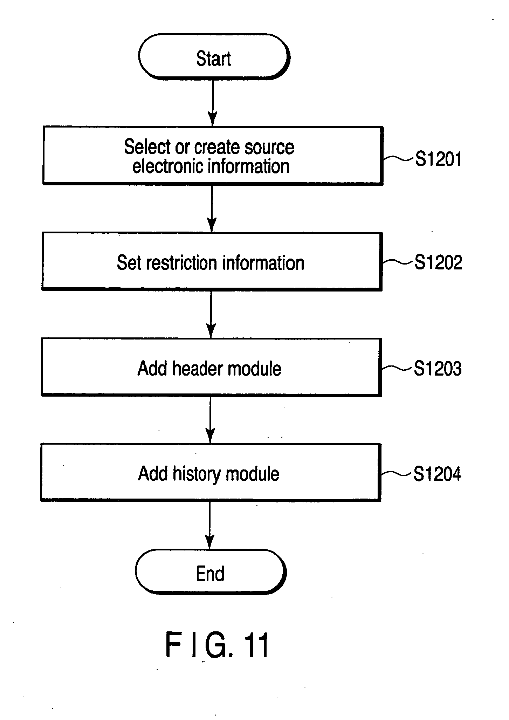

FIG. 11 to FIG. 15 illustrate, by flow charts and a state transition diagram, examples of the embodiments of the invention. FIG. 11 is a flow chart illustrating a process of creating the controllization electronic information 11 which has been described in the first embodiment.

In S1201, the controllization electronic information creating program selects or creates a file or information, which is the source electronic information 13. In S1202, the controllization electronic information creating program sets the restriction information 123 on the source electronic information 13. As has been described above, the restriction information 123 includes the restrictive attribute 123a and restrictive condition 123b, which stipulate viewing of information, copy, forward, tampering, clip, paste, and use of a part of information.

The settings of the restriction information 123 may be input by the user, or predetermined restriction information 123 may be selected from a menu screen.

The restrictive condition 123b varies depending on the degree of information. For hi-confidential information, strict restrictions are added. For general low-confidential information, restrictions are automatically added from a standard menu.

Depending on the content of information that is to be sent, the information with a higher confidentiality has a greater amount of restriction information 123. In the case of the web site 44 of the Web cast (FIG. 8), only viewing may be permitted and other acts may be prohibited. Other acts relating to video information are related to intellectual property rights such as copyrights and rights of portrait. Thus, in the case of re-use, such as copy, there is a method of permitting such re-use with charging.

A standard menu is added, unless otherwise designated. The standard menu is applied, for example, to low-confidential information which is highly possibly publicly known. Viewing, copy, print and forward are permitted. In some cases, the number of times of these acts is designated. For example, the permissible number of print sheets, the number of times of copy or move, and the destination of move, etc. are designated.

In S1203, the header module 12 including the associated restriction information 123 is added to the source electronic information (file, information) that is to be transmitted. In S1204, the history module 14 for storing the history data is added to the source electronic information. The series of steps for forcibly creating the controllization electronic information 11 are executed by the second controllization electronic information creating program which has been described with reference to FIG. 7.

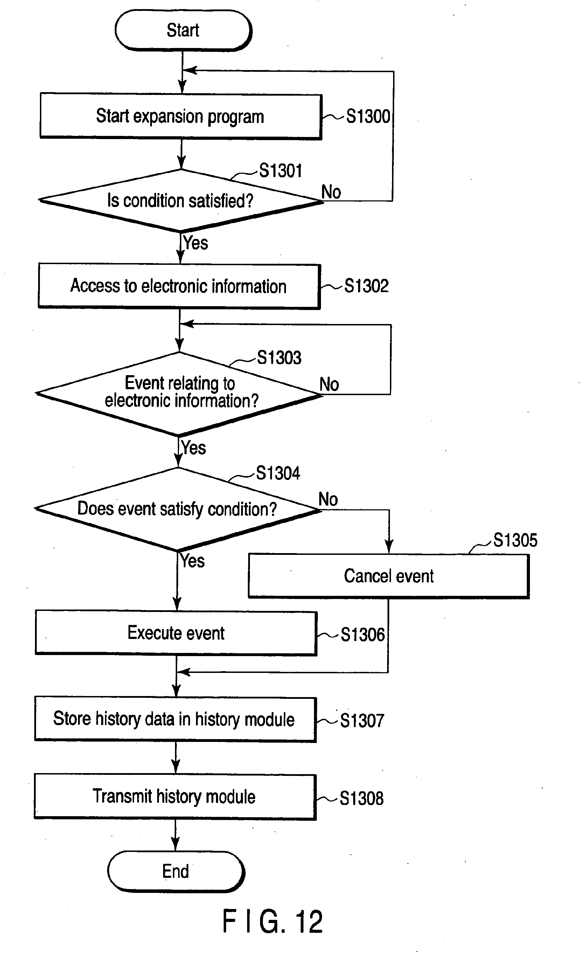

Next, a flow chart of FIG. 12 illustrates an example of a series of acts from the opening to the closing of electronic information which has been received.

If the expansion program 121 is activated (S1300), the expansion program 121 determines whether the condition, which is stipulated by the restriction information 123 corresponding to the electronic information, is satisfied or not (S1301).

If it is determined in S1301 that the condition is not satisfied, the process returns to S1300. If it is determined in S1301 that the condition is satisfied, the expansion program 121 develops the control program 122 of the controllization electronic information 11 on the memory device and the memory, and advances to the process of S1302.

In S1302, the expansion program 121 first opens the received electronic information for viewing, by the application program corresponding to the electronic information. In S1303, the control program 122 determines whether there is an event (overwrite, forward, etc.) corresponding to the electronic information. Specifically, this is determined according to whether the API, which is issued from the application program to the operating system, has been captured or not.

If it is determined in S1303 that there is an event corresponding to the electronic information, it is determined whether the event satisfies the condition that is stipulated by the restriction information 123 (S1304).

If it is determined that the condition is not satisfied, the event is canceled by the control program 122. If the condition is satisfied, the event is executed by the operating system and the application program that has issued the event (S1306).

In S1307, history data including the captured API and the date/time of the capture of the API is stored in the history module 14. The timing of write of the history data may be such that the history data is written each time the event is captured, or the history data is written at a time when the API for closing the electronic information is captured. In addition, in the case where the electronic information has been altered, the altered electronic information may be written in the controllization electronic information 11.

Next, the history module 14 is sent to the transmission source of the electronic information (S1308). In the case where the electronic information has been altered in addition to the history module 14, the altered electronic information may also be sent together with the history module 14.

The timing of transmission of the history module 14 may be such that the history module 14 is transmitted each time the event is captured, or the history module 14 is transmitted at a time when the API for closing the electronic information is captured.

Depending on the condition which is stipulated by the restriction information 123 that is added to the electronic information, there may be cases where forward is impossible or the number of times of forward and the destination of forward are limited. The history data is encrypted and written. The above-described operation is executed by the control program 122 or the second controllization electronic information creating program, and is unnoticed by the receiver.

For example, in the case where an API for overwrite is captured, the overwrite is executed if the overwrite is permitted in the restriction item that is stipulated by the restriction information 123 of the received electronic information. If the overwrite is prohibited, the overwrite is cancelled.

If the receiver receives more than stipulated in the restriction information 123, an alarm to the receiver is issued by the transmission source 47 (FIG. 8) and the electronic information is forcibly deleted. A penalty is imposed by predetermined contracts.

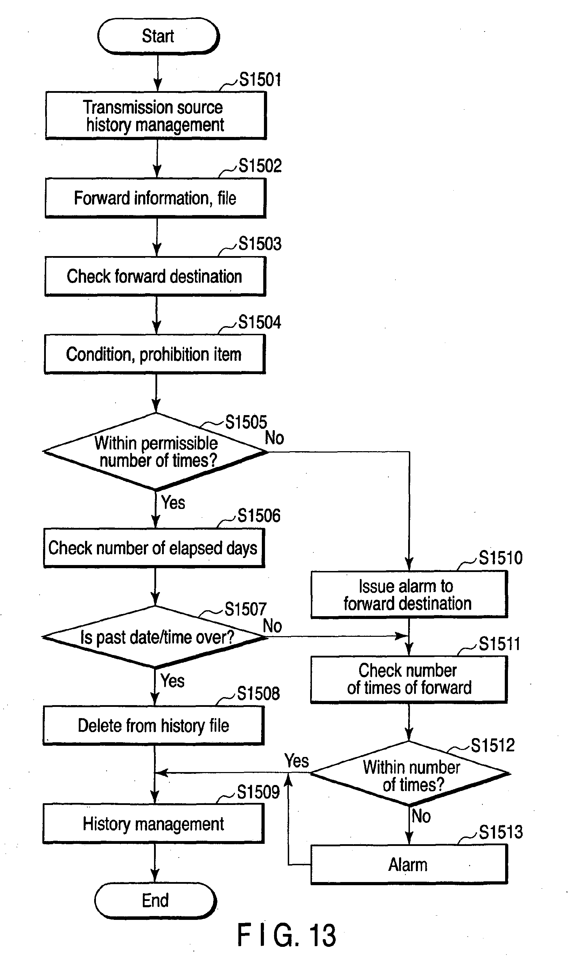

Next, FIG. 13 is a flow chart illustrating an example of the history management. This is applicable to the transmission source and the electronic information forward system which adopts the system of the present invention. S1501 is the history management of the transmission source, and S1502 shows the presence of the history indicating that the information or file was forwarded.

In S1503, it is checked where the electronic information was forwarded, on the basis of the forward destination information that is included in the history data of forward. In S1504, checking is conducted on the forward restriction condition and prohibition item, which are stipulated by the restriction information of the electronic information that is the object of history management. It is checked whether the scope of the forward destination restriction condition is observed at the forward destination.

In S1505, it is checked whether the number of times of the condition, which is stipulated by the restriction information of the electronic information, is observed. For example, it is checked how many times re-forward has been executed, and it is checked whether the limited number of times of copy, print, move, clip, paste and capture is observed or not. If any one of these items is not observed, an alarm is issued in S1510 to the terminal that uses the electronic information. If these items are not observed despite the alarm, the source electronic information is invalidated and deleted from the information processing apparatus that executes the history management of the transmission source.

In S1506, the number of past days of the forwarded electronic information is counted from the date/time of forward, which is included in the history data. In S1507, it is checked whether the past day/time is over the predetermined number of days of history management and storage. If the past day/time is over the predetermined number of days, the history data of the forwarded electronic information is deleted from the history file in S1508. In other words, the deleted history data is the record of the forwarded electronic information which is over the use-by date and no longer requires management.

In S1510, as described above, since the condition is not met, an alarm is issued to the forward destination, and, in some cases, the act of invalidating and deleting the original electronic information is conducted. In S1511, the number of times of forward of the file is checked on the basis of the history of forward which is included in the history data. In S1512, it is checked whether the number of times of forward is within the number of the condition or not.

If the number of times of forward is not within the number of the condition, the alarm is issued to the forward destination in S1513, and the act of invalidating and deleting the electronic information is conducted. The forward destination is included in the history of forward in the history data. In this manner, the transmission source of the electronic information executes the management of the history. The acts of tapping, tampering, overwrite and disguising are prevented. Therefore, the electronic information is secured.

The database of the authentication center 49 in FIG. 8 is the recording medium which manages highest confidential documents such as electronic seals, electronic signatures, electronic requests for managerial decision, and contracts. The history management is the most important task, and frequent checks are repeated to maintain security. The information, which is over the use-by date, is meaningless and is immediately deleted for security.

As regards the documents that are kept in the authentication center 49, in order to ensure confidentiality and security, it is advisable to provide means for automatically deleting important electronic seals and signatures with the passage of the number of days and time. This means should preferably be executed frequently.

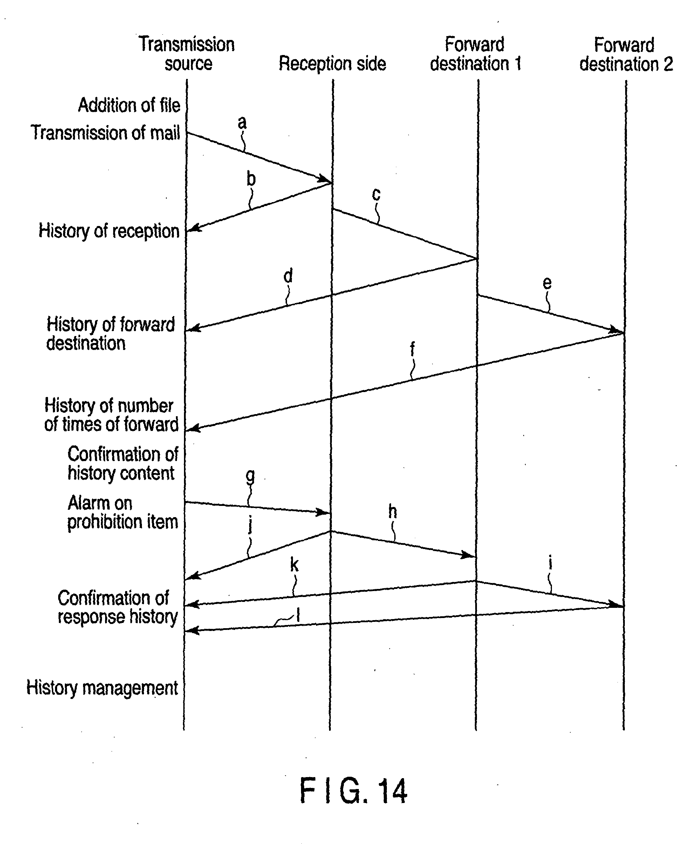

FIG. 14 is a state transition (transaction) diagram of the history management method of electronic information according to the present invention. In the Figure, in (a), electronic information was forwarded from a transmission source to a reception destination. In (b), a response of reception was sent from the reception destination to the transmission source. The transmission source manages this history.

In (c), the reception destination re-forwarded the electronic information to a forward destination 1. In (d), a response of reception was sent from the forward destination 1 to the original transmission source. The transmission source executes the management of the history of the forward destination. In (e), further re-forward was executed from the forward destination 1 to a forward destination 2. In (f), a response of reception was sent from the forward destination 2 to the transmission source. The transmission source of the source electronic information executes the history management.

In this history management, the number of times of forward and the forward destinations are checked. It is checked whether the restriction items, such as overwrite and tampering of electronic information, fail to be satisfied. If a prohibition item fails to be met, an alarm is issued to the transfer destination. In (g), (h) and (i), alarms are issued to the re-forward destination and to the further re-forward destination.

In (j), the response from the first reception destination is confirmed. In (k), the response from the re-forward destination is confirmed. In (1), the response from the further re-forward destination is confirmed. From these responses, the history is managed. As regards the forward destination from which no response is returned, the source electronic information is invalidated and deleted after the passage of a predetermined time period. In this manner, the history of the electronic information is managed, and unlawful acts can be prevented.

As has been described above, in the present invention, the conditions and history management are added to the electronic information. Thereby, the security of electronic information can be ensured and the effective period of electronic information can be strictly observed.

Furthermore, once the system according to the present invention is added to the original and source electronic information, even if forward is executed from the reception destination to a third party, or re-forward or further re-forward is executed, it is possible to follow the history. Therefore, the invention is very effective in the management of important documents. There is provided the effective means or tool in the digital society in which there are many problems with personal information and secret leak.

The present invention is not limited to the above-described embodiments. At the stage of practicing the invention, various modifications may be made without departing from the spirit of the invention. The embodiments may properly be combined and implemented as much as possible, and in such cases advantageous effects as combined can be obtained. Further, the embodiments include various inventions at various stages, and various inventions may be derived by properly combining structural elements disclosed in the embodiments. For example, in the case where an invention is derived by omitting some structural elements from all the structural elements disclosed in the embodiments and the derived invention is implemented, the omitted parts are properly supplemented by well-known art.

### Industrial Applicability

According to the present invention, the history of source electronic information can be understood even in the environment in which security is not ensured.

## Claims

1. An information processing apparatus **characterized by** comprising:
memory means for storing electronic information and restriction information which indicates a restriction relating to a process of the electronic information;
means for executing an application program which uses the stored electronic information;
means for capturing an application programming interface (API) of an operating system, which relates to the electronic information that meets the restriction indicated by the restriction information and is accessed by the executed application program; and
a history module which stores history data relating to the electronic information including the captured API, and is provided in connection with the electronic information.

2. The information processing apparatus according to claim 1, **characterized by** further comprising means for transmitting the history data to an external other information processing apparatus which executes security management of the electronic information.

3. The information processing apparatus according to claim 1, **characterized by** further comprising means for storing the electronic information which is altered by access from the application program.

4. The information processing apparatus according to claim 1, **characterized in that** the storing of the history data is executed when the executed electronic information is closed.

5. The information processing apparatus according to claim 1, **characterized in that** the history data includes the captured API and a date/time at which the API is captured.

6. The information processing apparatus according to claim 1, **characterized in that** the means for executing and the means for capturing are realized by a control program, and
the control program, the electronic information, the restriction information and the history module constitute one controllization electronic information.

7. The information processing apparatus according to claim 6, **characterized in that** the controllization electronic information is one received from outside.

8. The information processing apparatus according to claim 6, **characterized in that** the control program is one stored in an execution format.

9. A history management method of electronic information in an information processing apparatus including memory means for storing electronic information and restriction information which indicates a restriction relating to a process of the electronic information, the method **characterized by** comprising:
executing an application program which uses the stored electronic information;
capturing an application programming interface (API) of an operating system, which relates to the electronic information that meets the restriction indicated by the restriction information and is accessed by the executed application program; and
storing history data relating to the electronic information, which includes the captured API, in a history module which is provided in connection with the electronic information.

10. A program for executing history management of electronic information in an information processing apparatus including memory means for storing electronic information and restriction information which indicates a restriction relating to a process of the electronic information, the program causing the information processing apparatus to:
execute an application program which uses the stored electronic information;
capture an application programming interface (API) of an operating system, which relates to the electronic information that meets the restriction indicated by the restriction information and is accessed by the executed application program; and
store history data relating to the electronic information, which includes the captured API, in a history module which is provided in connection with the electronic information.

11. An electronic information management system comprising:
memory means for storing electronic information and restriction information which indicates a restriction relating to a process of the electronic information;
means for executing an application program which uses the stored electronic information;
means for capturing an application programming interface (API) of an operating system, which relates to the electronic information that meets the restriction indicated by the restriction information and has been accessed by the executed application program;
a history module which stores history data relating to the electronic information including the captured API, and is provided in connection with the electronic information;
a first information processing apparatus including means for transmitting the history data to an external other information processing apparatus which executes security management of the electronic information; and
a second information processing apparatus which receives the history data which is transmitted from the first information processing apparatus, and executes history management of the electronic information on the basis of the received history data.
